# EUROPEAN PATENT APPLICATION

(11) **EP 4 752 389 A1**
(43) Date of publication of application: **03.06.2026**
(21) Application number: 24845450.6
(22) Date of filing: 12.07.2024
(51) Int. Cl.: F16C 33/78, F16C 19/18, F16J 15/3232, F16J 15/3256

(54) **WHEEL BEARING DEVICE**

(30) Priority: 27.07.2023 JP 2023122799
(71) Applicant: NTN Corporation, Osaka-shi Osaka 530-0005 (JP)
(72) Inventor: HATA, Yusuke, Iwata-shi, Shizuoka 438-8510 (JP); KONISHI, Ryo, Iwata-shi, Shizuoka 438-8510 (JP)
(74) Representative: Grünecker Patent- und Rechtsanwälte PartG mbB
(86) International application number: PCT/JP2024/025260
(87) International publication number: WO 2025/023069

(57) **Abstract**

The present invention addresses the problem of suppressing movement of a slinger in an axial direction regardless of the resultant axial length of a cylindrical part of the slinger. An outer-side seal member (10) of a wheel bearing device (1) comprises: a slinger (13) that is provided to a base part (3d) of a hub flange (3b) and that has a cylindrical part (13a) which fits into an outer peripheral surface (3j) of a hub ring (3) and a disk part (13b) which faces the hub flange (3b); and a seal member (12) that has a seal lip. The outer peripheral surface (3j) of the hub ring (3) has a fitting part (31) into which the cylindrical part (13a) of the slinger (13) fits. The fitting part (31) has a small-diameter section (311) and a large-diameter section (312) that is positioned farther from the hub flange (3b) than the small-diameter section (311) in the axial direction and that is formed to have a diameter larger than that of the small-diameter section (311).

## Description

### TECHNICAL FIELD

The present invention relates to a bearing device for a vehicle wheel.

### BACKGROUND ART

In related art, a bearing device for a vehicle wheel that rotatably supports a wheel in a suspension device of an automobile or the like is known. A sealing device that closes an opening end of an annular space formed by an outer member and an inner member to prevent entry of foreign matter such as muddy water is provided in the bearing device for a vehicle wheel.

As the sealing device, for example, there is known a sealing device having a configuration including a core metal fitted to an inner periphery of an outer ring which is an outer member, a seal member integrally joined to the core metal and having a plurality of seal lips, a slinger having a cylindrical portion provided at a base portion of a hub flange formed on a hub ring which is an inner member and fitted to an outer peripheral surface of the hub ring, and a disk portion coupled to a hub flange-side end portion of the cylindrical portion and facing the hub flange.

In the sealing device having such a configuration, when the hub ring repeatedly receives a vehicle turning load or vibration from a wheel, the received load or vibration is transmitted to the slinger, and the slinger may move in an axial direction.

When the slinger moves in the axial direction, a fastening allowance of the seal lip in contact with the slinger may change, the slinger may interfere with a rolling element accommodated between a raceway surface of the outer member and a raceway surface of the inner member, or a gap may be generated between the slinger and the hub flange to cause water infiltration into an inside.

Therefore, in the sealing device of the bearing device for a vehicle wheel disclosed in Patent Literature 1, an annular protruding portion is formed on a shoulder portion of the hub ring, and an end surface of the cylindrical portion of the slinger abuts against the protruding portion of the hub ring. Thus, the movement of the slinger in the axial direction is suppressed.

### CITATIONS LIST

### PATENT LITERATURE

Patent Literature 1: JP-B-6228756 Gazette

### SUMMARY OF INVENTION

### TECHNICAL PROBLEMS

However, in the sealing device of Patent Literature 1, when a length of the cylindrical portion of the slinger in the axial direction is set to be short within a tolerance range, a gap is generated between the end surface of the cylindrical portion of the slinger and the protruding portion of the hub ring.

When a gap is generated between the end surface of the cylindrical portion and the protruding portion of the hub ring, the slinger moves in the axial direction in a range of the gap, and it is difficult to suppress a change in the fastening allowance of the seal lip and occurrence of water intrusion into the interior due to the generation of the gap between the slinger and the hub flange.

The present invention has been made in view of the above circumstances, and it is an object of the present invention to provide a bearing device for a vehicle wheel capable of suppressing movement of a slinger in an axial direction regardless of a resultant length of a cylindrical portion of the slinger of a sealing device in the axial direction.

### SOLUTIONS TO PROBLEMS

That is, a bearing device for a vehicle wheel is a bearing device for a vehicle wheel including an outer member having a plurality of rows of outer raceway surfaces on an inner periphery, an inner member including a hub ring having one inner raceway surface facing the outer raceway surface and a hub flange for mounting a wheel on an outer periphery, and a raceway surface forming member coupled to the hub ring and having another inner raceway surface facing the outer raceway surface on an outer periphery, a plurality of rows of rolling elements rollably accommodated between both the raceway surfaces of the outer member and the inner member, and a sealing device that closes an opening end on one end side of an annular space formed by the outer member and the inner member in an axial direction, in which the sealing device includes a slinger that has a cylindrical portion provided on a base portion of the hub flange and fitted into an outer peripheral surface of the hub ring, and a disk portion facing the hub flange, and a seal member having a seal lip, the outer peripheral surface of the hub ring has a fitting portion into which the cylindrical portion of the slinger is fitted, and the fitting portion has a small diameter portion and a large diameter portion positioned farther from the hub flange than the small diameter portion in the axial direction and formed to have a larger diameter than the small diameter portion.

### ADVANTAGEOUS EFFECTS OF INVENTION

According to the present invention, it is possible to suppress the movement of the slinger in the axial direction regardless of the resultant length of a cylindrical portion of the slinger in the axial direction.

### BRIEF DESCRIPTION OF DRAWINGS

FIG. 1 is a side cross-sectional view illustrating a bearing device for a vehicle wheel.
FIG. 2 is a side cross-sectional view illustrating a fitting portion of a hub ring into which an outer-side seal member and a slinger of the outer-side seal member are fitted.
FIG. 3 is an enlarged side cross-sectional view illustrating the fitting portion of the hub ring.
FIG. 4 is a diagram illustrating a relationship between a fitting position of the slinger with respect to the fitting portion and a drawing force of the slinger.
FIG. 5 is an enlarged side cross-sectional view illustrating a fitting portion of a hub ring according to a second embodiment.
FIG. 6 is an enlarged side cross-sectional view illustrating a fitting portion of a hub ring according to a third embodiment.
FIG. 7 is an enlarged side cross-sectional view illustrating a cylindrical portion of a slinger according to a second embodiment.
FIG. 8 is a side cross-sectional view illustrating a bearing device for a vehicle wheel having a fourth-generation structure.

### DESCRIPTION OF EMBODIMENTS

Hereinafter, modes for carrying out the present invention will be described with reference to the accompanying drawings.

### [Bearing device for vehicle wheel]

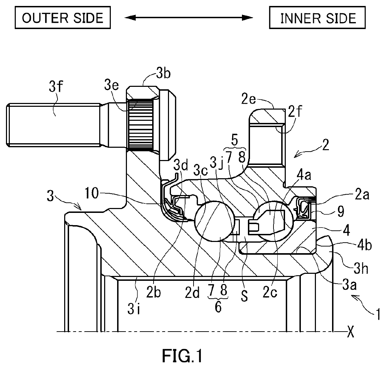

A bearing device for a vehicle wheel 1 illustrated in FIG. 1 is an embodiment of a bearing device for a vehicle wheel according to the present invention, and rotatably supports a wheel in a suspension device of a vehicle such as an automobile.

In the following description, an axial direction represents a direction along a rotation axis X of the bearing device for a vehicle wheel 1. Furthermore, an outer side represents one end side in the axial direction and a wheel side of the bearing device for a vehicle wheel 1 when the bearing device is mounted to a vehicle body, and an inner side represents the other end side in the axial direction and a vehicle body side of the bearing device for a vehicle wheel 1 when the bearing device is mounted to the vehicle body.

The bearing device for a vehicle wheel 1 has a configuration called a third generation, and includes an outer ring 2 that is an outer member, a hub ring 3 and an inner ring 4 that are an inner member, two rows of an inner-side ball row 5 and an outer-side ball row 6 that are rolling rows, and an inner-side seal member 9 and an outer-side seal member 10. The inner ring 4 is an example of a raceway surface forming member connected to the hub ring.

An inner-side opening portion 2a into which the inner-side seal member 9 can be fitted is formed at an inner-side end portion of the outer ring 2. An outer-side opening portion 2b into which the outer-side seal member 10 can be fitted is formed at an outer-side end portion of the outer ring 2. An outer raceway surface 2c on an inner side and an outer raceway surface 2d on an outer side are formed on an inner peripheral surface of the outer ring 2.

A vehicle body mounting flange 2e for mounting the outer ring 2 to a vehicle body side member is integrally formed on an outer peripheral surface of the outer ring 2. A bolt hole 2f into which a fastening member (here, bolt) for fastening the vehicle body side member and the outer ring 2 is inserted is provided in the vehicle body mounting flange 2e.

A small-diameter stepped portion 3a having a smaller diameter than an outer-side end portion is formed at an inner-side end portion of an outer peripheral surface 3j of the hub ring 3. A hub flange 3b for mounting the wheel is integrally formed at the outer-side end portion of the hub ring 3. A plurality of bolt holes 3e is formed in the hub flange 3b. A hub bolt 3f for fastening the hub ring 3 and the wheel or a brake component is press-fitted into the bolt hole 3e. The hub ring 3 has a through-hole 3i penetrating in the axial direction, and a constant velocity universal joint that is an inner member can be fitted into the through-hole 3i so as to be rotatable integrally with the hub ring 3.

An inner raceway surface 3c on the outer side is provided on the outer peripheral surface 3j of the hub ring 3 so as to face the outer raceway surface 2d on the outer side of the outer ring 2. That is, on an outer side of the inner member, the inner raceway surface 3c is formed by the hub ring 3. The inner raceway surface 3c is an example of one inner raceway surface facing the outer raceway surface.

The inner-side seal member 9 is fitted into an inner-side opening end of an annular space S formed by the outer ring 2 and the hub ring 3, and closes the inner-side opening end. The outer-side seal member 10 is fitted into an outer-side opening end of the annular space S formed by the outer ring 2 and the hub ring 3, and closes the outer-side opening end. The outer-side seal member 10 is an example of a sealing device.

The inner ring 4 is provided on the small-diameter stepped portion 3a of the hub ring 3. The inner ring 4 is fixed to the small-diameter stepped portion 3a of the hub ring 3 by press-fitting and caulking. The inner ring 4 applies preload to the inner-side ball row 5 and the outer-side ball row 6 which are the rolling rows. The inner ring 4 has an inner-side end surface 4b at the inner-side end portion. A caulking portion 3h caulked to the inner-side end surface 4b of the inner ring 4 is formed at the inner-side end portion of the hub ring 3.

An inner raceway surface 4a on an inner side is provided on an outer peripheral surface of the inner ring 4 so as to face the outer raceway surface 2c on the inner side of the outer ring 2. That is, the inner ring 4 forms the inner raceway surface 4a on an inner side of the inner member. The inner raceway surface 4a is an example of the other inner raceway surface facing the outer raceway surface.

The inner-side ball row 5 and the outer-side ball row 6, which are the rolling rows, are formed by holding a plurality of balls 7, which are rolling elements, by a holder 8. The inner-side ball row 5 is rollably sandwiched between the inner raceway surface 4a of the inner ring 4 and the outer raceway surface 2c on the inner side of the outer ring 2. The outer-side ball row 6 is rollably sandwiched between the inner raceway surface 3c of the hub ring 3 and the outer raceway surface 2d on the outer side of the outer ring 2. That is, the inner-side ball row 5 and the outer-side ball row 6 are rollably accommodated between the raceway surfaces of the outer member and the inner member.

In the bearing device for a vehicle wheel 1, the outer ring 2, the hub ring 3 and the inner ring 4, the inner-side ball row 5, and the outer-side ball row 6 constitute a double-row angular ball bearing. Note that the bearing device for a vehicle wheel 1 may constitute a double-row tapered roller bearing instead of the double-row angular ball bearing.

### [Outer-side seal member]

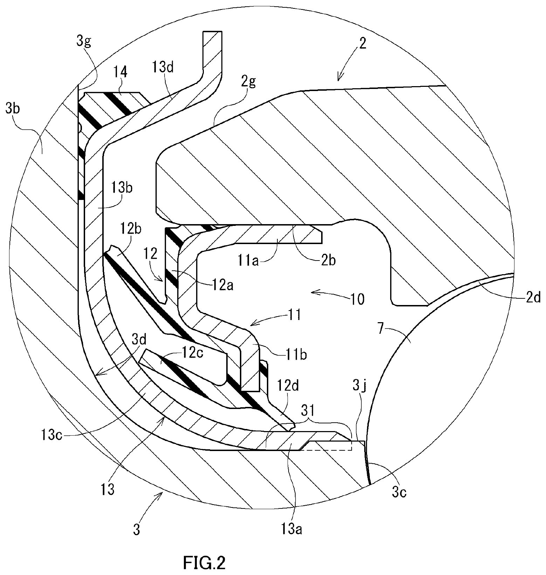

As illustrated in FIG. 2, the outer-side seal member 10 includes a core metal 11 fitted to an inner periphery at the outer-side end portion of the outer ring 2, a seal member 12 integrally joined to the core metal 11, and a slinger 13 fitted to a base portion 3d of the hub flange 3b of the hub ring 3. The outer-side seal member 10 only needs to be fixed to the outer ring 2 that is the outer member, and may be fitted into an outer periphery of the outer-side end portion of the outer ring 2, for example.

The core metal 11 is formed by using, for example, a steel plate, and includes a cylindrical fitting portion 11a fitted into the inner periphery of the outer-side opening portion 2b of the outer ring 2 and an inner portion 11b extending from the inner-side end portion of the fitting portion 11a toward an inner diameter side.

The seal member 12 is formed by using, for example, an elastic member such as synthetic rubber, and is joined to the core metal 11 by vulcanization adhesion. The seal member 12 includes a base portion 12a, a first side lip 12b, a second side lip 12c, and a radial lip 12d. The base portion 12a is joined to an inner diameter side end portion of an inner-side surface of the inner portion 11b of the core metal 11, an inner diameter side end surface of the inner portion 11b, an outer-side surface of the inner portion 11b, and an outer-side end portion of the fitting portion 11a of the core metal 11.

The first side lip 12b extends from the core metal 11 toward the hub flange 3b on the outer side. Specifically, the first side lip 12b extends from the inner portion 11b of the core metal 11 toward the hub flange 3b side and an outer diameter side. The first side lip 12b is in contact with the slinger 13. The first side lip 12b is an example of a seal lip of the seal member.

The second side lip 12c extends from the core metal 11 toward the hub flange 3b on the outer side on an inner diameter side of the first side lip 12b. Specifically, the second side lip 12c extends from the inner portion 11b of the core metal 11 toward the hub flange 3b side and an outer diameter side. The second side lip 12c is in sliding contact with the slinger 13. The second side lip 12c is an example of a seal lip of the seal member.

The radial lip 12d extends from the core metal 11 toward an inner diameter side on an inner side of the second side lip 12c in a radial direction. Specifically, the radial lip 12d extends from the inner portion 11b of the core metal 11 toward an inner diameter side and an inner side. The radial lip 12d is in sliding contact with the slinger 13. The radial lip 12d is an example of a seal lip of the seal member.

The slinger 13 is formed by using, for example, a steel plate, and includes a cylindrical portion 13a, a disk portion 13b, a connecting portion 13c, and an extending portion 13d.

The cylindrical portion 13a is formed in a cylindrical shape, and is fitted on an outer peripheral surface 3j of the hub ring 3 on an inner side of the hub flange 3b. An inner peripheral surface of the cylindrical portion 13a is formed in parallel with the rotation axis X in the axial direction. The cylindrical portion 13a faces the radial lip 12d in the radial direction, and the cylindrical portion 13a and the radial lip 12d are in contact with each other.

The outer peripheral surface 3j of the hub ring 3 has a fitting portion 31 into which the cylindrical portion 13a of the slinger 13 is fitted. The fitting portion 31 is positioned between the base portion 3d and the inner raceway surface 3c on the outer peripheral surface 3j of the hub ring 3.

The disk portion 13b is positioned closer to the hub flange 3b than the cylindrical portion 13a. The disk portion 13b is formed in a disk shape and faces an inner-side surface 3g of the base portion 3d of the hub flange 3b. There is a gap between the disk portion 13b and the inner-side surface 3g of the hub flange 3b. The disk portion 13b faces the first side lip 12b in the axial direction, and the disk portion 13b and the first side lip 12b are in contact with each other.

The connecting portion 13c is formed in an arc shape as viewed from a circumferential direction, and connects the cylindrical portion 13a and the disk portion 13b. The connecting portion 13c faces the second side lip 12c in the axial direction, and the connecting portion 13c and the second side lip 12c are in contact with each other.

The extending portion 13d extends from an outer diameter side end portion of the disk portion 13b toward an inner side and an outer diameter side. An outer peripheral surface at the outer-side end portion of the outer ring 2 is formed as a tapered surface 2g whose diameter decreases toward an outer side, and the extending portion 13d is formed to be parallel to the tapered surface 2g. The extending portion 13d and the tapered surface 2g overlap each other as viewed from the radial direction, and a labyrinth seal is formed by the extending portion 13d and the tapered surface 2g.

An elastic member 14 is integrally joined to an outer-side surface at a boundary portion between the extending portion 13d and the disk portion 13b. The elastic member 14 is formed by using, for example, synthetic rubber. The elastic member 14 is in contact with the inner-side surface 3g of the hub flange 3b and seals a gap between the inner-side surface 3g of the hub flange 3b and the disk portion 13b of the slinger 13.

In the outer-side seal member 10 having the above configuration, when the hub ring 3 repeatedly receives a vehicle turning load or vibration from the wheel, the received load or vibration is transmitted to the slinger 13, and the slinger 13 may move in the axial direction such as the inner side.

When the slinger 13 moves in the axial direction, a fastening allowance of the first side lip 12b and the second side lip 12c in contact with the slinger 13 may change, the cylindrical portion 13a of the slinger 13 may interfere with the ball 7 accommodated between the outer raceway surface 2d of the outer ring 2 and the inner raceway surface 3c of the hub ring 3, or a gap may be generated between the slinger 13 and the hub flange 3b to cause water infiltration into the bearing device for a vehicle wheel 1.

Therefore, in the bearing device for a vehicle wheel 1, the fitting portion 31 on the outer peripheral surface 3j of the hub ring 3 into which the cylindrical portion 13a of the slinger 13 is fitted is formed as follows to suppress the movement of the slinger 13 in the axial direction.

### [Fitting portion on outer peripheral surface of hub ring]

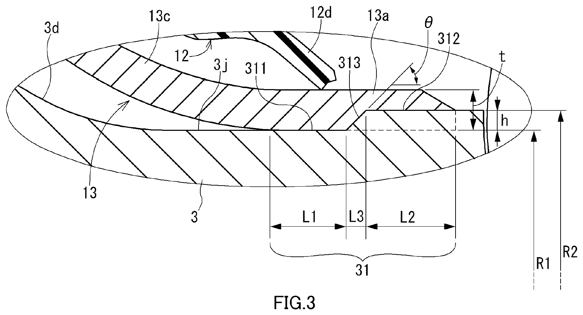

As illustrated in FIG. 3, the fitting portion 31 of the hub ring 3 includes a small diameter portion 311, a large diameter portion 312, and a stepped portion 313.

The small diameter portion 311 is formed on an inner side of the base portion 3d. A length in the radial direction from the rotation axis X to the small diameter portion 311 on the outer peripheral surface 3j of the hub ring 3 is R1.

The large diameter portion 312 is positioned on an inner side of the small diameter portion 311. That is, the large diameter portion 312 is positioned farther from the hub flange 3b than the small diameter portion 311 in the axial direction. The large diameter portion 312 is formed to have a larger diameter than the small diameter portion 311, and the stepped portion 313 is formed between the small diameter portion 311 and the large diameter portion 312.

A length in the radial direction from the rotation axis X to the large diameter portion 312 on the outer peripheral surface 3j of the hub ring 3 is R2. A step height h of the large diameter portion 312 with respect to the small diameter portion 311 is a difference between the length R2 in the radial direction from the rotation axis X to the large diameter portion 312 and the length R1 in the radial direction from the rotation axis X to the small diameter portion 311 (h = R2 - R1).

A length L1 of the small diameter portion 311 in the axial direction and a length L2 of the large diameter portion 312 in the axial direction are both formed to be larger than a tolerance of the length of the cylindrical portion 13a of the slinger 13 in the axial direction. Therefore, even though the length of the cylindrical portion 13a in the axial direction changes within a range of the tolerance, the slinger 13 can be in a state of being fitted into both the small diameter portion 311 and the large diameter portion 312 across the stepped portion 313 when the cylindrical portion 13a is fitted into the fitting portion 31.

The stepped portion 313 is positioned between the small diameter portion 311 and the large diameter portion 312 in the axial direction, and connects the small diameter portion 311 and the large diameter portion 312. The stepped portion 313 is formed by an inclined surface whose diameter increases from the small diameter portion 311 toward the large diameter portion 312 in the axial direction.

The slinger 13 is press-fitted into the fitting portion 31 on the outer peripheral surface 3j of the hub ring 3 from an inner side, and the cylindrical portion 13a of the slinger 13 has a fastening allowance with the fitting portion 31. However, since the large diameter portion 312 is formed to have a larger diameter than the small diameter portion 311, a fastening allowance of the cylindrical portion 13a with respect to the large diameter portion 312 is larger than the fastening allowance of the cylindrical portion 13a with respect to the small diameter portion 311.

In the bearing device for a vehicle wheel 1, when the hub ring 3 repeatedly receives a vehicle turning load or vibration from the wheel, the received load or vibration may be transmitted to the slinger 13 of the outer-side seal member 10, and a force in a direction moving toward the inner side may act on the slinger 13.

On the other hand, in a case where the force in the direction of moving toward the inner side acts on the slinger 13, a force required for the slinger 13 to move toward the inner side increases as the fastening allowance of the slinger 13 with respect to the outer peripheral surface 3j of the hub ring 3 increases.

Therefore, the small diameter portion 311 and the large diameter portion 312 positioned on the inner side of the small diameter portion 311 are provided like the fitting portion 31 of the hub ring 3, and thus, it is possible to increase load resistance against the force in the direction of moving the slinger 13 toward the inner side.

In particular, even though the length of the cylindrical portion 13a of the slinger 13 in the axial direction changes within the range of the tolerance, since the slinger 13 is in a state of being fitted into both the small diameter portion 311 and the large diameter portion 312, it is possible to suppress the movement of the slinger 13 in the axial direction regardless of the resultant length of the cylindrical portion 13a of the slinger 13 in the axial direction.

Furthermore, in the fitting portion 31, the small diameter portion 311 and the large diameter portion 312 are connected by the stepped portion 313, and the cylindrical portion 13a of the slinger 13 is caught by a boundary portion between the stepped portion 313 and the large diameter portion 312. Therefore, for example, it is possible to effectively increase the load resistance against the force in the direction of moving the slinger 13 toward the inner side as compared with a case where the fitting portion 31 is formed in a tapered shape in which the diameter smoothly increases from the outer side toward the inner side.

Furthermore, when the fastening allowance of the cylindrical portion 13a of the slinger 13 with respect to the fitting portion 31 of the hub ring 3 is too large, plastic deformation may occur in the slinger 13 when the slinger 13 is press-fitted into the fitting portion 31. Therefore, the step height h between the large diameter portion 312 and the small diameter portion 311 is preferably half or less of a thickness t of the cylindrical portion 13a of the slinger 13 in the radial direction (h ≤ (t/2)).

The step height h is set to be half or less of the thickness t, and thus, it is possible to suppress the occurrence of the plastic deformation of the slinger 13 due to an excessive fastening allowance of the cylindrical portion 13a of the slinger 13 with respect to the fitting portion 31 of the hub ring 3. Furthermore, the step height h between the large diameter portion 312 and the small diameter portion 311 is preferably 10 µm or more from the viewpoint of suppressing the movement of the slinger 13 in the axial direction.

**In** the hub ring 3, an inclination angle θ of the inclined surface with respect to the axial direction in the stepped portion 313 positioned between the large diameter portion 312 and the small diameter portion 311 is set to be 3° or more and 45° or less.

The larger the inclination angle θ is, the larger the load resistance against the movement of the slinger 13 toward the inner side can be. However, when the inclination angle θ exceeds 45°, since there is a possibility that the amount of scraping of the slinger 13 by the stepped portion 313 when the slinger 13 is press-fitted into the fitting portion 31 increases, the inclination angle θ is preferably set to 45° or less. Furthermore, the inclination angle θ is preferably 3° or more from the viewpoint of suppressing the movement of the slinger 13 in the axial direction.

A length L3 of the stepped portion 313 in the axial direction is not particularly limited, but can be set to 1 mm or less. The length L3 of the stepped portion 313 in the axial direction is set to 1 mm or less, and thus, the inclination angle θ of the stepped portion 313 can be set to be large.

### [Relationship between fitting position of slinger to fitting portion of hub ring and drawing force of slinger]

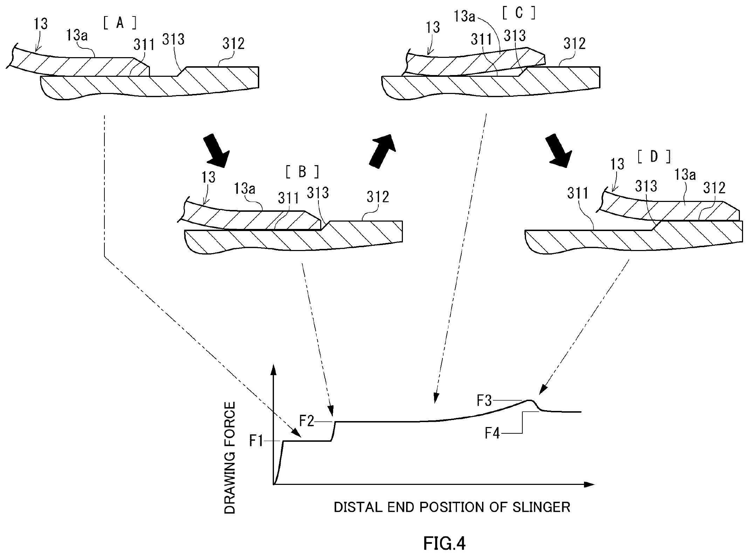

As illustrated in [A] of FIG. 4, for example, in a state where the cylindrical portion 13a of the slinger 13 is fitted only to the small diameter portion 311 of the fitting portion 31 and a gap is generated between the inner side end which is a distal end of the cylindrical portion 13a and the stepped portion 313, the drawing force which is the force required for the slinger 13 to move toward the inner side is F1.

When the slinger 13 moves toward the inner side from the state illustrated in [A] of FIG. 4, an inner-side end of the cylindrical portion 13a of the slinger 13 reaches the stepped portion 313, and the cylindrical portion 13a rides on the stepped portion 313 toward the large diameter portion 312 as illustrated in [B] of FIG. 4, a drawing force of the slinger 13 becomes drawing F2 larger than the drawing force F1 (F2 > F1).

As illustrated in [C] of FIG. 4, in a state where the cylindrical portion 13a of the slinger 13 rides on the large diameter portion 312 and is fitted into both the small diameter portion 311 and the large diameter portion 312, when the slinger 13 further moves toward the inner side, the drawing force of the slinger 13 rises as the slinger 13 moves toward the inner side. The drawing force of the slinger 13 becomes a largest drawing force F3 immediately before an outer-side end of the cylindrical portion 13a of the slinger 13 moving toward the inner side reaches the large diameter portion 312 (F3 > F2).

As illustrated in [D] of FIG. 4, when the outer-side end of the cylindrical portion 13a of the slinger 13 rides on the large diameter portion 312 and the entire cylindrical portion 13a is fitted into the large diameter portion 312, the drawing force of the slinger 13 is slightly lower than the drawing force F3 and becomes a drawing force F4 (F4<F3).

As described above, the drawing force in a state where the cylindrical portion 13a of the slinger 13 is fitted into both the small diameter portion 311 and the large diameter portion 312 is in a range of the drawing force F2 to the drawing force F3, and is larger than the drawing force F1 in a state where the cylindrical portion 13a of the slinger 13 is fitted only into the small diameter portion 311 and a gap is generated between the inner-side end of the cylindrical portion 13a and the stepped portion 313.

Therefore, the slinger 13 in a state where the cylindrical portion 13a is fitted into both the small diameter portion 311 and the large diameter portion 312 can be suppressed from moving in the axial direction. **In** particular, since the drawing force of the slinger 13 becomes the largest drawing force F3 immediately before the outer-side end of the cylindrical portion 13a reaches the large diameter portion 312, it is possible to maintain a state where the cylindrical portion 13a is fitted into both the small diameter portion 311 and the large diameter portion 312.

### [Second embodiment of fitting portion in hub ring]

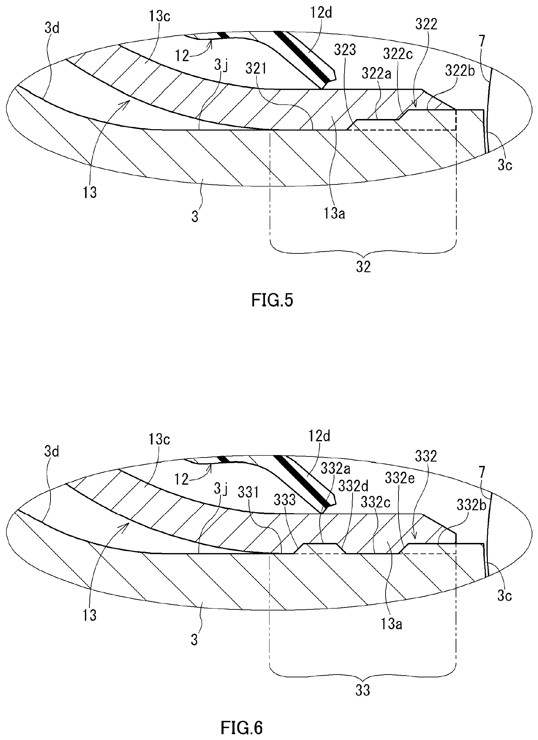

The fitting portion 31 of the hub ring 3 can also be formed like a fitting portion 32 illustrated in FIG. 5. The fitting portion 32 is positioned between the base portion 3d and the inner raceway surface 3c on the outer peripheral surface 3j of the hub ring 3, and includes a small diameter portion 321, a large diameter portion 322, and a stepped portion 323. The small diameter portion 321 and the stepped portion 323 of the fitting portion 32 are formed in the same manner as the small diameter portion 311 and the stepped portion 313 of the fitting portion 31.

The large diameter portion 322 is positioned on an inner side of the small diameter portion 321. That is, the large diameter portion 322 is positioned farther from the hub flange 3b than the small diameter portion 321 in the axial direction. The large diameter portion 322 is formed to have a larger diameter than the small diameter portion 321, and the stepped portion 323 is formed between the large diameter portion 322 and the small diameter portion 321.

The large diameter portion 322 includes a first large diameter portion 322a, a second large diameter portion 322b, and a stepped portion 322c. The first large diameter portion 322a is continuously formed on an inner side of the stepped portion 323.

The second large diameter portion 322b is positioned on an inner side of the first large diameter portion 322a. That is, the second large diameter portion 322b is positioned farther from the hub flange 3b than the first large diameter portion 322a in the axial direction.

The first large diameter portion 322a and the second large diameter portion 322b are formed to have a larger diameter than the small diameter portion 321. The second large diameter portion 322b is formed to have a larger diameter than the first large diameter portion 322a, and the stepped portion 322c is formed between the first large diameter portion 322a and the second large diameter portion 322b.

The stepped portion 322c connects the first large diameter portion 322a and the second large diameter portion 322b. The stepped portion 322c is formed by an inclined surface whose diameter increases from the first large diameter portion 322a toward the second large diameter portion 322b in the axial direction. The stepped portion 322c can be formed in the same manner as the stepped portion 313.

The cylindrical portion 13a of the slinger 13 is fitted over the small diameter portion 321, the first large diameter portion 322a, and the second large diameter portion 322b in the fitting portion 32. In the fitting portion 32, the small diameter portion 321, the first large diameter portion 322a, and the second large diameter portion 322b are arranged in this order from the outer side toward the inner side.

A fastening allowance of the cylindrical portion 13a with respect to the first large diameter portion 322a is larger than a fastening allowance of the cylindrical portion 13a with respect to the small diameter portion 321, and a fastening allowance of the cylindrical portion 13a with respect to the second large diameter portion 322b is larger than a fastening allowance of the cylindrical portion 13a with respect to the first large diameter portion 322a. That is, the fastening allowance of the cylindrical portion 13a with respect to the fitting portion 32 increases from the outer side toward the inner side. As a result, it is possible to increase the load resistance against the force in the direction of moving the slinger 13 toward the inner side.

As described above, the large diameter portion 322 can include a plurality of portions having different outer diameters, such as the first large diameter portion 322a and the second large diameter portion 322b. In the present embodiment, the large diameter portion 322 includes two portions having different outer diameters, but may include three or more portions having different outer diameters. Furthermore, the plurality of portions having different outer diameters can be arranged so as to have a larger diameter from the outer side toward the inner side.

### [Third embodiment of fitting portion in hub ring]

The fitting portion 31 of the hub ring 3 can also be formed like a fitting portion 33 illustrated in FIG. 6. The fitting portion 33 is positioned between the base portion 3d and the inner raceway surface 3c on the outer peripheral surface 3j of the hub ring 3, and includes a small diameter portion 331, a large diameter portion 332, and a stepped portion 333. The small diameter portion 331 and the stepped portion 333 of the fitting portion 33 are formed in the same manner as the small diameter portion 311 and the stepped portion 313 of the fitting portion 31.

The large diameter portion 332 is positioned on an inner side of the small diameter portion 331. That is, the large diameter portion 332 is positioned farther from the hub flange 3b than the small diameter portion 331 in the axial direction. The large diameter portion 332 has a portion formed to have a larger diameter than the small diameter portion 331, and the stepped portion 333 is formed between the large diameter portion 332 and the small diameter portion 331.

The large diameter portion 332 includes a first large diameter portion 332a, a second large diameter portion 332b, a recessed portion 332c, a first stepped portion 332d, and a second stepped portion 332e. The first large diameter portion 332a is continuously formed on an inner side of the stepped portion 333.

The second large diameter portion 332b is positioned on an inner side of the first large diameter portion 332a. That is, the second large diameter portion 332b is positioned farther from the hub flange 3b than the first large diameter portion 332a in the axial direction.

The first large diameter portion 332a and the second large diameter portion 332b are formed to have a larger diameter than the small diameter portion 331. The first large diameter portion 332a and the second large diameter portion 332b are formed to have the same diameter. However, the first large diameter portion 332a and the second large diameter portion 332b can be formed to have outer diameters different from each other. In this case, the second large diameter portion 332b can be formed to have a larger diameter than the first large diameter portion 332a, and the first large diameter portion 332a can be formed to have a larger diameter than the second large diameter portion 332b.

The recessed portion 332c is positioned between the first large diameter portion 332a and the second large diameter portion 332b. The recessed portion 332c is formed to have a smaller diameter than the first large diameter portion 332a and the second large diameter portion 332b. That is, the first large diameter portion 332a and the second large diameter portion 332b are positioned apart from each other with the recessed portion 332c interposed therebetween in the axial direction.

The first stepped portion 332d is formed between the first large diameter portion 332a and the recessed portion 332c. The first stepped portion 332d connects the first large diameter portion 332a and the recessed portion 332c. The first stepped portion 332d is formed by an inclined surface whose diameter decreases from the first large diameter portion 332a toward the recessed portion 332c in the axial direction. The first stepped portion 332d can be formed in the same manner as the stepped portion 313 except for the inclination direction.

The second stepped portion 332e is formed between the recessed portion 332c and the second large diameter portion 332b. The second stepped portion 332e connects the recessed portion 332c and the second large diameter portion 332b. The second stepped portion 332e is formed by an inclined surface whose diameter increases from the recessed portion 332c toward the second large diameter portion 332b in the axial direction. The second stepped portion 332e can be formed in the same manner as the stepped portion 313.

The cylindrical portion 13a of the slinger 13 is fitted over the small diameter portion 331, the first large diameter portion 332a, the recessed portion 332c, and the second large diameter portion 332b in the fitting portion 33. In the fitting portion 33, the small diameter portion 331, the first large diameter portion 332a, the recessed portion 332c, and the second large diameter portion 332b are arranged in this order from the outer side toward the inner side.

A fastening allowance of the cylindrical portion 13a with respect to the first large diameter portion 332a and the second large diameter portion 332b is larger than a fastening allowance of the cylindrical portion 13a with respect to the small diameter portion 331, and a fastening allowance of the cylindrical portion 13a with respect to the recessed portion 332c is smaller than a fastening allowance of the cylindrical portion 13a with respect to the first large diameter portion 332a and the second large diameter portion 332b.

That is, the recessed portion 332c in which the fastening allowance of the cylindrical portion 13a is smaller than that of the first large diameter portion 332a and the second large diameter portion 332b is positioned between the first large diameter portion 332a and the second large diameter portion 332b in which the fastening allowance of the cylindrical portion 13a is larger than that of the small diameter portion 331.

As a result, when the cylindrical portion 13a of the slinger 13 is fitted into the fitting portion 33, since the recessed portion 332c in which the fastening allowance of the cylindrical portion 13a decreases is present between the first large diameter portion 332a and the second large diameter portion 332b in which the fastening allowance of the cylindrical portion 13a increases, it is possible to suppress the plastic deformation of the cylindrical portion 13a due to an excessive increase in the fastening allowance of the cylindrical portion 13a.

On the other hand, in the cylindrical portion 13a of the slinger 13, since the fastening allowance of the portion fitted into the first large diameter portion 332a and the second large diameter portion 332b is larger than the fastening allowance of the portion fitted into the small diameter portion 331, it is possible to increase the load resistance against the force in the direction of moving toward the inner side of the slinger 13.

As described above, the large diameter portion 332 has a configuration in which a portion having a small diameter is positioned between portions having a large diameter as in a configuration in which the recessed portion 332c is formed between the first large diameter portion 332a and the second large diameter portion 332b. Furthermore, in the large diameter portion 332, the configuration in which the portion having the small diameter is formed between the portions having the large diameter can be configured to repeatedly appear a plurality of times in the axial direction. Furthermore, the large diameter portion 332 according to a third embodiment and the large diameter portion 322 according to a second embodiment may be arranged side by side in the axial direction.

### [Second embodiment of cylindrical portion of slinger]

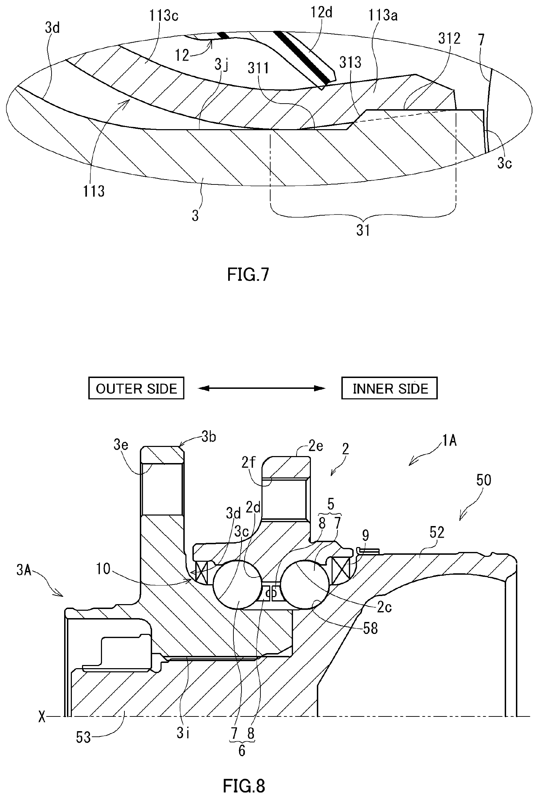

The cylindrical portion 13a of the slinger 13 fitted into the fitting portion 31 of the hub ring 3 can also be formed like a cylindrical portion 113a of a slinger 113 illustrated in FIG. 7.

The cylindrical portion 113a is continuously formed on an inner side of a connecting portion 113c of the slinger 113. An inner peripheral surface of the cylindrical portion 113a is formed as a tapered surface whose diameter increases from an outer side toward an inner side, and is inclined with respect to the rotation axis X.

The cylindrical portion 113a of the slinger 113 is fitted over the small diameter portion 311 and the large diameter portion 312, and a fastening allowance of a portion of the cylindrical portion 113a fitted into the large diameter portion 312 is larger than a fastening allowance of a portion of the cylindrical portion 113a fitted into the small diameter portion 311.

However, since a diameter of the cylindrical portion 113a increases toward an inner side, and an inner-side portion of the cylindrical portion 113a fitted into the large diameter portion 312 is formed to have a larger diameter than an outer-side portion of the cylindrical portion 113a fitted into the small diameter portion 311, a fastening allowance of the portion fitted to the large diameter portion 312 of the cylindrical portion 113a does not become excessively large.

As a result, it is possible to increase the load resistance against the force in the direction of moving toward the inner side of the slinger 13 while suppressing the occurrence of the plastic deformation in the slinger 13. Furthermore, since the fastening allowance of the portion of the cylindrical portion 113a fitted to the large diameter portion 312 is not excessively increased, a pressing force when the slinger 113 is press-fitted into the fitting portion 31 of the hub ring 3 can be reduced, and workability of a press-fitting work can be improved.

Although the bearing device for a vehicle wheel 1 according to the present embodiment is provided as the bearing device for a vehicle wheel 1 having the third-generation structure in which the inner raceway surface 3c is directly formed on the outer periphery of the hub ring 3, the present invention is not limited thereto. The bearing device for a vehicle wheel 1 may have a fourth-generation structure in which the inner raceway surface facing the outer raceway surface 2c of the outer ring 2 is formed in a constant velocity universal joint fitted into the through-hole 3i of the hub ring 3 instead of being formed in the inner ring 4 and the inner ring 4 is not provided. In this case, the constant velocity universal joint becomes a raceway surface forming member connected to the hub ring.

The bearing device for a vehicle wheel having the fourth-generation structure that does not include the inner ring 4 can be provided as, for example, a bearing device for a vehicle wheel 1A illustrated in FIG. 8. The bearing device for a vehicle wheel 1A includes a constant velocity universal joint 50 connected to a hub ring 3A and does not include the inner ring 4. The constant velocity universal joint 50 is an example of the raceway surface forming member connected to the hub ring.

The constant velocity universal joint 50 includes a mouth portion 52 that supports a shaft to which a driving force from a driving source is input, and a stem portion 53 extending from the mouth portion 52 toward an outer side. The hub ring 3A has a through-hole 3i penetrating in the axial direction, and the through-hole 3i and the stem portion 53 are spline-fitted.

An inner raceway surface 58 facing the outer raceway surface 2c on the inner side of the outer ring 2 is formed on an outer peripheral surface of an outer-side end portion of the mouth portion 52. The inner raceway surface 58 is an example of the other inner raceway surface facing the outer raceway surface. The inner-side ball row 5 is rollably sandwiched between the outer raceway surface 2c on the inner side of the outer ring 2 and the inner raceway surface 58 of the mouth portion 52 of the constant velocity universal joint 50.

That is, in the bearing device for a vehicle wheel 1A, the constant velocity universal joint 50 having the inner raceway surface 58 facing the outer raceway surface 2c of the outer ring 2 also serves as the inner ring.

Although the embodiment of the present invention has been described above, the present invention is not limited to such an embodiment in any way, and the embodiment is merely an example, and it is needless to say that the present invention can be implemented in further various forms without departing from the gist of the present invention. The scope of the present invention is indicated by the recitation of the claims, and further includes the meaning equivalent to the recitation of the claims and all changes within the scope of the claims.

### INDUSTRIAL APPLICABILITY

The present invention is applicable to the bearing device for a vehicle wheel.

### REFERENCE SIGNS LIST

- 1: bearing device for vehicle wheel
- 2: outer ring
- 2b: outer-side opening portion
- 2c: outer raceway surface (on inner side)
- 2d: outer raceway surface (on outer side)
- 3: hub ring
- 3b: hub flange
- 3c: inner raceway surface
- 3d: base portion
- 3j: outer peripheral surface
- 4: inner ring
- 4a: inner raceway surface
- 5: inner-side ball row
- 6: outer-side ball row
- 10: outer-side seal member
- 11: core metal
- 12: seal member
- 12b: first side lip
- 12c: second side lip
- 12d: radial lip
- 13, 113: slinger
- 13a, 113a: cylindrical portion
- 13b: disk portion
- 31: fitting portion
- 311, 321, 331: small diameter portion
- 312, 322, 332: large diameter portion
- 313, 323, 333: stepped portion
- 322a, 332a: first large diameter portion
- 322b, 332b: second large diameter portion
- 332c: recessed portion
- h: step height
- t: thickness
- S: annular space

## Claims

1. A bearing device for a vehicle wheel comprising:
an outer member having a plurality of rows of outer raceway surfaces on an inner periphery;
an inner member including a hub ring having one inner raceway surface facing the outer raceway surface and a hub flange for mounting a wheel on an outer periphery, and a raceway surface forming member coupled to the hub ring and having another inner raceway surface facing the outer raceway surface on an outer periphery;
a plurality of rows of rolling elements rollably accommodated between both the raceway surfaces of the outer member and the inner member; and
a sealing device that closes an opening end on one end side of an annular space formed by the outer member and the inner member in an axial direction,
wherein
the sealing device includes
a slinger that has a cylindrical portion provided on a base portion of the hub flange and fitted into an outer peripheral surface of the hub ring, and a disk portion facing the hub flange, and
a seal member having a seal lip,
the outer peripheral surface of the hub ring has a fitting portion into which the cylindrical portion of the slinger is fitted, and
the fitting portion has a small diameter portion and a large diameter portion positioned farther from the hub flange than the small diameter portion in the axial direction and formed to have a larger diameter than the small diameter portion.

2. The bearing device for a vehicle wheel according to claim 1, wherein a step height of the large diameter portion in a radial direction with respect to the small diameter portion is half or less of a thickness of the cylindrical portion of the slinger in a radial direction.

3. The bearing device for a vehicle wheel according to claim 1 or 2, wherein
the fitting portion includes a stepped portion that connects the small diameter portion and the large diameter portion,
the stepped portion is formed by an inclined surface whose diameter increases from the small diameter portion toward the large diameter portion in the axial direction, and
an inclination angle of the inclined surface with respect to the axial direction is 3° or more and 45° or less.

4. The bearing device for a vehicle wheel according to claim 1 or 2, wherein
the large diameter portion includes a first large diameter portion formed to have a larger diameter than the small diameter portion and a second large diameter portion formed to have a larger diameter than the first large diameter portion, and
the second large diameter portion is positioned farther from the hub flange than the first large diameter portion.

5. The bearing device for a vehicle wheel according to claim 1 or 2, wherein
the large diameter portion includes a first large diameter portion and a second large diameter portion formed to have a larger diameter than the small diameter portion, and
a recessed portion having a smaller diameter than the first large diameter portion and the second large diameter portion is formed between the first large diameter portion and the second large diameter portion in the axial direction.

6. The bearing device for a vehicle wheel according to claim 1 or 2, wherein the cylindrical portion of the slinger is formed in a tapered shape whose diameter increases with increasing distance from the disk portion in the axial direction.
